# EUROPÄISCHE PATENTANMELDUNG

(11) **EP 2 544 347 A1**
(43) Veröffentlichungstag der Anmeldung: **09.01.2013**
(21) Anmeldenummer: 11172970.3
(22) Anmeldetag: 07.07.2011
(51) Int. Cl.: H02M 3/156, H02M 3/335, H02M 1/44

(54) **Schaltwandler und Verfahren zur Regelung des Schaltwandlers**

(71) Anmelder: Siemens Aktiengesellschaft, 80333 München (DE)
(72) Erfinder: Portisch, Daniel, 2130 Mistelbach (AT)

(57) **Zusammenfassung**

Die Erfindung betrifft ein Verfahren zur Regelung eines Schaltwandlers in einem quasiresonanten Betrieb, wobei einem PWM-Kontroller (1) zur Bestimmung eines Abschaltzeitpunkts eines Schaltelements (S) eine Sense-Spannung (U6) vorgegeben wird, wobei des Weiteren ein Einschaltzeitpunkt des Schaltelements (S) in ein Valley (V1, V2, V3, V4) einer am abgeschalteten Schaltelement (S) anliegenden, schwingenden Spannung (U1) fällt und wobei bei jedem nach einem Abschaltvorgang auftretenden Valley (V1, V2, V3, V4) die Sense-Spannung (U6) reduziert wird. Zudem betrifft die Erfindung einen Schaltwandler für quasiresonantes Schalten, wobei einem PWM-Kontroller (1) zur Bestimmung eines Abschaltzeitpunkts eine Sense-Spannung (U6) und eine Regler-Ausgangsspannung (U_{Reg}) zugeführt sind, wobei des Weiteren eine Vally-Switch-Regelung (3) zur Bestimmung eines Einschaltzeitpunktes vorgesehen ist und wobei das Signal am Ausgang eines Valley-Erkennungskreises einer Schaltung zur Reduzierung der Sense-Spannung (U6) zugeführt ist. Damit wird bei jeder Last ein stabiler Betriebspunkt erreicht.

## Beschreibung

Die Erfindung betrifft ein Verfahren zur Regelung eines Schaltwandlers in einem quasiresonanten Betrieb, wobei einem PWM-Kontroller zur Bestimmung eines Abschaltzeitpunkts eines Schaltelements eine Sense-Spannung vorgegeben wird und wobei ein Einschaltzeitpunkt des Schaltelements in ein Valley einer am abgeschalteten Schaltelement anliegenden, schwingenden Spannung fällt. Zudem betrifft die Erfindung einen Schaltwandler für quasiresonantes Schalten, wobei einem PWM-Kontroller zur Bestimmung eines Abschaltzeitpunkts eine Sense-Spannung und eine Regler-Ausgangsspannung zugeführt sind und wobei eine Vally-Switch-Regelung zur Bestimmung eines Einschaltzeitpunktes vorgesehen ist.

Schaltelemente (z.B. Feldeffekttransistoren), Transformatoren oder Drosseln enthalten parasitäre Kapazitäten, welche zu Schaltverlusten bei hart schaltenden Wandlern führen. Bei einem hart schaltenden Wandler schwingt während der Totzeit im diskontinuierlichen Modus (DCM) die parasitäre Kapazität mit einer Wandlerhauptwicklung um eine Eingangsspannung bzw. Zwischenkreisspannung. Die Spannung an den parasitären Kapazitäten variiert mit der Schwingung, weist aber durchgehend signifikante Werte auf. Wenn das Schaltelement im nächsten Taktzyklus einschaltet, werden die parasitären Kondensatoren über den Transistor entladen und erzeugen dabei eine hohe Stromspitze. Da diese auftritt, wenn am Schaltelement eine hohe Spannung anliegt, erzeugt sie Schaltverluste. Darüber hinaus ist die Stromspitze reich an Oberwellen, was die EMI erhöht.

Statt mit einem festen Takt zu schalten, wird bei quasiresonantem Schalten mittels eines Erkennungskreises ein Minimum (auch "Valley" genannt) der Drain-Source-Spannung des Schaltelements effektiv erfasst und das Schaltelement erst zu diesem Zeitpunkt eingeschalten. Dadurch wird die Einschaltstromspitze minimiert, da die parasitäre Kapazität auf die Mindestspannung geladen ist. Diese Art des Schaltens wird allgemein als Valley-Switching, Nulldurchgangsschalten oder quasiresonantes Schalten bezeichnet. Es führt zu einer Reduktion der Schaltverluste und der Störabstrahlung, welche bei hart schaltenden Wandlern auftreten. Da der Resonanzkreis nur während der Schaltübergänge an einem ansonsten herkömmlichen Rechtecksignalwandler eingesetzt wird, bezeichnet man dieses Schalten quasiresonant.

Im Folgenden wird jedes Minimum der am abgeschalteten Schaltelement anliegenden schwingenden Spannung als Valley bezeichnet. Das während einer Schaltperiode zeitlich zuerst auftretende Minimum wird als erstes Valley bezeichnet. Die nachfolgenden Valleys werden entsprechend ihrer zeitlichen Abfolge nummeriert, also zweites Valley, drittes Valley etc.

Das Einschalten während eines Valley bewirkt ein laufendes Zurücksetzen des Periodenbeginns (Impuls-Reset) und somit ein Anpassen der Schaltfrequenz unabhängig von der Last oder der Zwischenkreisspannung zu diesem Zeitpunkt. Diese Betriebsart beginnt an der Grenze zwischen kontinuierlichem (CCM) und diskontinuierlichem Leitungsmodus (DCM) und kommt im diskontinuierlichen Leitungsmodus voll zum Tragen.

Für den Fall, dass immer während des gleichen Valley (z.B. immer beim ersten Valley) eingeschaltet wird, steigt mit sinkender Last die Schaltfrequenz, bis im Leerlauf eine Maximalfrequenz erreicht wird. Mit steigender Frequenz steigen jedoch auch die Schaltverluste, da pro Zeiteinheit mehr verlustbringende Schaltvorgänge stattfinden.

Um die zu hohe Schaltfrequenz bei wenig Last zu vermeiden, wird in der Regel der Einschaltzeitpunkt auf ein späteres Valley verlegt (z.B. auf das zweite Valley). Nachteilig ist dabei die sprunghafte Umschaltung, die einen instabilen Zustand der Regelung hervorruft. Zur Regelung einer konstanten Ausgangsspannung wird in einem solchen Übergangsbereich mit jedem Schaltzyklus zwischen zwei Valleys hin und her gesprungen. Dieser Effekt wird auch "Valley-Skipping" genannt. Eine solche Reglerschwingung ist meist hörbar und hat höhere Verlustleistungen zur Folge.

Der Erfindung liegt die Aufgabe zugrunde, für eine Verfahren und einen Schaltwandler der eingangs genannten Art eine Verbesserung gegenüber dem Stand der Technik anzugeben.

Erfindungsgemäß wird diese Aufgabe gelöst durch ein Verfahren gemäß Anspruch 1 und einen Schaltwandler gemäß Anspruch 6. Weiterbildungen sind in abhängigen Ansprüchen angegeben.

Dabei wird zur Vermeidung von Valley-Skipping bei jedem nach einem Abschaltvorgang auftretenden Valley die Sense-Spannung reduziert. Die im abgeschalteten Zustand des Schaltelements ohne diese Maßnahme konstant bleibende Sense-Spannung wird demnach während eines Schaltzyklus einmal reduziert, wenn der Schaltwandler im ersten Valley einschaltet. Wird im zweiten Valley eingeschaltet, reduziert sich die Sense-Spannung zweimal. Beim Einschalten im dritten Valley erfolgen drei Reduzierungen der Sense-Spannung usw.

Mit jeder Reduzierung sinkt das Spannungsniveau, von dem aus die Sensespannung bei eingeschaltetem Schaltelement ansteigt. Der PWM-Kontroller schaltet ab, wenn die Sense-Spannung den mittels einer Regler-Ausgangsspannung bestimmten Wert erreicht. Mit unveränderter Regler-Ausgangsspannung führt die reduzierte Sense-Spannung demnach zu einem späteren Abschalten. Damit steigt die vom Schaltwandler übertragene Leistung an.

Sobald aufgrund einer vorgegebenen Leistungsreduktion die maximal zulässige Schaltfrequenz erreicht wird, bewirkt eine Valley-Switch Regelung ein Einschalten des Schaltelements bei einem späteren Valley. Gleichzeitig sinkt die Schaltfrequenz, weil sich die Ausschaltzeit des Schaltelements um die Periodendauer der am abgeschalteten Schaltelement anliegenden, schwingenden Spannung verlängert. Aufgrund der erfindungsgemäßen Maßnahme führt die abgesenkte Schaltfrequenz zu keiner Leistungsreduktion. Vielmehr bewirkt das spätere Abschalten infolge der reduzierten Sense-Spannung zu einem Leistungsanstieg. Der Spannungsregler des Schaltwandlers kompensiert diesen Leistungsanstieg durch ein Absenken der Regler-Ausgangsspannung. Es erfolgt also kein Sprung zurück zu einem frühren Valley. In der gleichen Weise wird Valley-Skipping bei einer ansteigenden Leistung vermieden. Sobald ein vorgegebener Leistungsanstieg zu einem Einschalten bei einem frühres Valley führt, sinkt infolge des erfindungsgemäßen Eingriffs die übertragen Leistung ab. Der Spannungsregler erhöht die Regler-Ausgangsspannung, bis die vorgegeben Leistung erreicht ist, ohne zu dem später auftretenden Valley zurückzuspringen.

In einer vorteilhaften Weiterbildung wird bei jedem auftretenden Valley eine Hilfsspannung reduziert und die Sense-Spannung wird durch Summierung der Hilfsspannung und einer zum Strom durch das Schaltelement proportionalen Messspannung gebildet. Auf diese Weise ist eine einfache Reduktion der Sense-Spannung gegeben.

Dabei ist es zudem von Vorteil, wenn mittels eines Analogzählers aus einem Ausgangssignal eines Valley-Erkennungskreises die Hilfsspannung gebildet wird, welche bei jedem auftretenden Valley reduziert wird. Der Analogzähler zählt die während eines Schaltzyklus auftretenden Valleys in der Weise, dass bei jedem auftretenden Valley eine Spannungsreduktion erfolgt.

Des Weiteren ist günstigerweise vorgesehen, dass mittels einer Nulldurchgangserkennung die Nulldurchgänge einer an einer Hilfswicklung anliegenden Spannung detektiert werden und dass aus dem resultierenden Nulldurchgangssignal mittels des Analogzählers die sich bei jedem auftretenden Valley reduzierende Hilfsspannung gebildet wird.

Ein vorteilhaftes Verfahren sieht zudem vor, dass der Analogzähler nach jedem Schaltzyklus mittels eines am Steuerausgang des PWM-Kontrollers anliegenden Schaltsignals zurückgesetzt wird.

Beim erfindungsgemäßen Schaltwandler ist das Signal am Ausgang des Valley-Erkennungskreises einer Schaltung zur Reduzierung der Sense-Spannung zugeführt.

Dabei ist es vorteilhaft, wenn der Valley-Erkennungskreis als eine Nulldurchgangserkennung ausgeführt ist, welcher eine an einer Hilfswicklung anliegende Spannung zugeführt ist.

Eine Weiterbildung sieht vor, dass die Schaltung zur Reduzierung der Sense-Spannung einen Analogzähler und einen Summierer umfasst, dass das Signal am Ausgang des Valley-Erkennungskreises dem Analogzähler zugeführt ist und dass eine Hilfsspannung am Ausgang des Analogzählers und eine zum Strom durch das Schaltelement proportionale Messspannung dem Summierer zugeführt sind. Auf diese Weise ist ein einfacher Aufbau mit wenigen Bauteilen sichergestellt.

Für einen einfachen Reset-Vorgang ist dem Analogzähler ein am Steuerausgang des PWM-Kontrollers anliegendes Schaltsignal zugeführt, um nach jedem Schaltzyklus ein Zurücksetzen des Analogzählers herbeizuführen.

Die Erfindung wird nachfolgend in beispielhafter Weise unter Bezugnahme auf die beigefügten Figuren erläutert. Es zeigen in schematischer Darstellung:
- Fig. 1: Leistungsdiagramm nach dem Stand der Technik
- Fig. 2: erfindungsgemäßes Leistungsdiagramm
- Fig. 3: Schaltwandler-Blockschaltbild nach dem Stand der Technik
- Fig. 4: Blockschaltbild eines erfindungsgemäßen Schaltwandlers
- Fig. 5: Blockschaltbild mit Analogzähler und Summierer

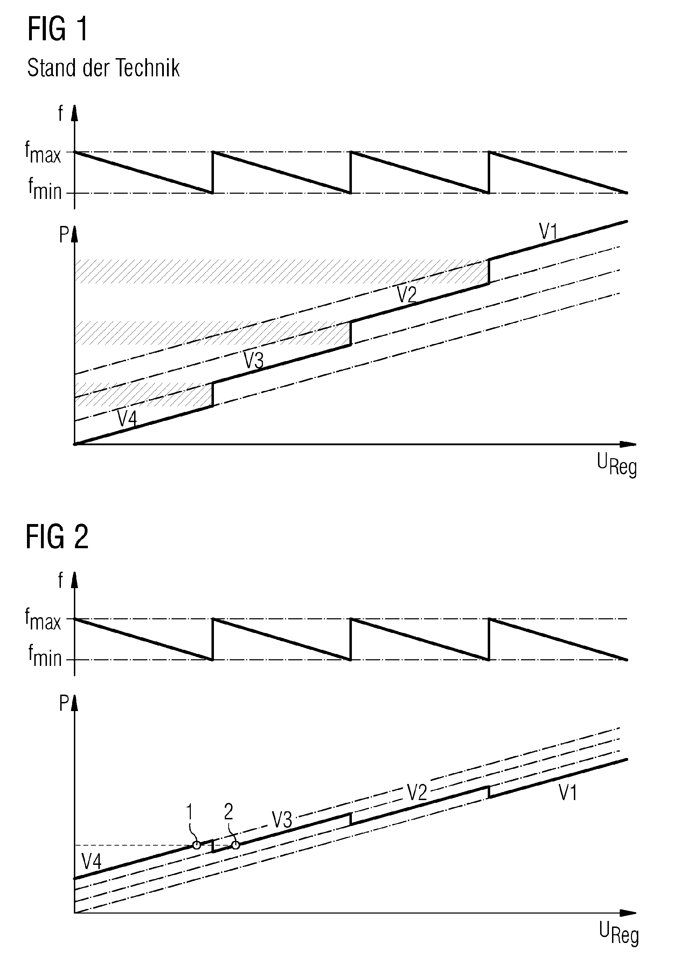

In Fig. 1 ist die Problematik bisheriger Schaltwandler ersichtlich. Bei erhöhter Last am Ausgang des Schaltwandlers steigt die Regler-Ausgangsspannung U_{Reg} und somit die übertragene Leistung P. Gleichzeitig sinkt die Schaltfrequenz f. Wenn die Schaltfrequenz f einen vorgegebenen minimalen Wert erreicht, schaltet die Valley-Switch-Regelung 3 vom z.B. vierten Valley V4 auf das z.B. dritte Valley V3. Dadurch steigt die Schaltfrequenz f und somit die übertragene Leistung P des Schaltwandlers sprunghaft an. Um den Leistungsanstieg auszugleichen, regelt der Spannungs-Regler 6 wieder zurück, indem die Regler-Ausgangsspannung U_{Reg} abgesenkt wird. Dadurch steigt die Schaltfrequenz f. Wenn die Schaltfrequenz f einen vorgegebenen maximalen Wert fₘₐₓ erreicht, schaltet die Valley-Switch-Regelung 3 wieder vom dritten Valley V3 auf das vierte Valley V4 um. Dadurch sinkt die Frequenz f und somit nimmt die übertragene Leistung P sprunghaft ab. Der Regler 6 gibt daraufhin wieder eine höhere Regler-Ausgangsspannung U_{Reg} vor. Der Vorgang wiederholt sich periodisch, es kommt zu einer Grenzzyklusschwingung mit einer typischen Schwingfrequenz von 5-15kHz. Die schraffiert dargestellten Leistungsbereiche können mit einem Schaltwandler und einem Verfahren nach dem Stand der Technik nicht stabil angefahren werden.

Fig. 2 zeigt das Diagramm mit erfindungsgemäßen Eingriffen bei einem Wechsel zwischen zwei Valleys. Steigt eine am Ausgang angeschlossene Last an, steigt auch die Regler-Ausgangsspannung U_{Reg} und somit die übertragene Leistung P des Schaltwandlers. Dabei sinkt die Schaltfrequenz f. Sobald die Schaltfrequenz f einen vorgegeben Minimalwert fₘᵢₙ erreicht, schaltet die Valley-Switch-Regelung 3 vom z.B. vierten Valley V4 auf das z.B. dritte Valley V3 um. Dadurch steigt die Schaltfrequenz f sprunghaft an. Durch den erfindungsgemäßen Eingriff in die Strommessung sinkt jedoch die vom Schaltwandler übertragene Leistung P. Infolgedessen erhöht sich die Regler-Ausgangsspannung U_{Reg}, bis die gewünschte übertragene Leistung P erreicht wird.

Verringert sich die Last am Ausgang, sinkt die Regler-Ausgangsspannung U_{Reg} und folglich auch die übertragene Leistung P. Die Schaltfrequenz f steigt an. Erreicht die Schaltfrequenz f einen vorgegebenen Maximalwert fₘₐₓ, schaltet die Valley-Switch-Regelung 3 vom z.B. dritten Valley V3 auf das z.B. vierte Valley V4 um. Die Frequenz f sinkt dabei sprunghaft. Die übertragene Leistung P des Schaltwandlers steigt jedoch infolge des erfindungsgemäßen Eingriffs in die Strommessung. Dadurch verringert der Regler 6 die Regler-Ausgangsspannung U_{Reg}, bis die gewünschte übertragene Leistung P erricht wird.

Der Spannungs-Regler 6 kann durch die erfindungsgemäßen Eingriffe sowohl bei ansteigender Last als auch bei abfallender Last immer stabile Betriebspunkte erreichen.

Im Falle einer Lasterhöhung ausgehend vom z.B. vierten Valley V4 steigt die Regler-Ausgangsspannung U_{Reg}, bis ein stabiler Betriebspunkt 1 erreicht ist.

Verringert sich die Last am Ausgang ausgehend vom z.B. dritten Valley V3, sinkt die Regler-Ausgangsspannung U_{Reg}, bis ein stabiler Betriebspunkt 2 erreicht ist.

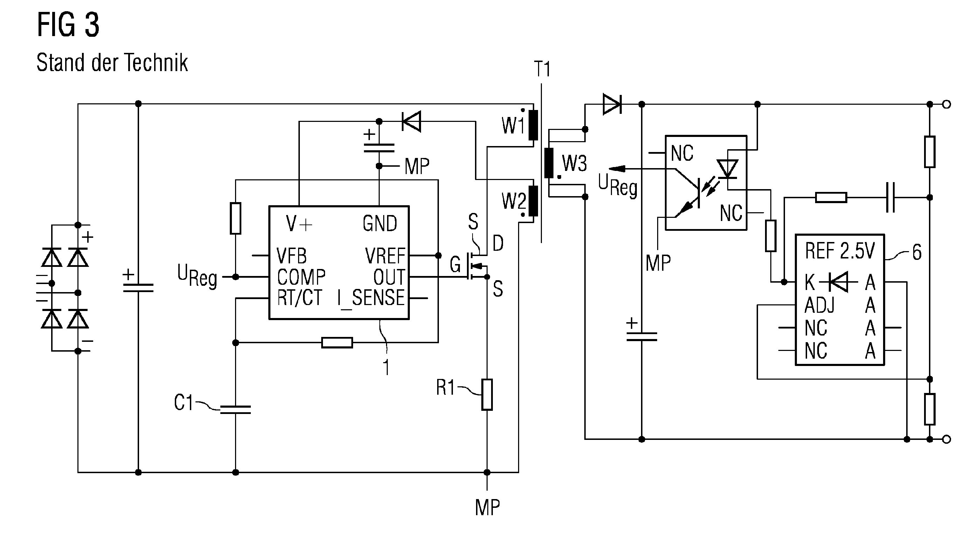

Fig. 3 zeigt einen herkömmlichen Schaltwandler. Ein Transformator T1 umfasst primärseitig eine Hauptwicklung W1 und eine Hilfswicklung W3. Über eine sekundärseitige Wicklung W3 wird Energie an den Ausgang des Schaltwandlers abgegeben.

Der primärseitig angeordnete PWM-Kontroller 1 umfasst einen Frequenzgenerator, welcher mittels einer Sägezahnspannung ein PWM-Signal generiert. Dabei wird am Beginn einer steigenden Flanke des Frequenzgenerators über einen Steuerausgang OUT das Schaltelement S eingeschaltet.

Dem PWM-Kontroller 1 ist die Regler-Ausgangsspannung U_{Reg} des Spannungsreglers 6 zugeführt. Diese Spannung U_{Reg} oder eine dazu proportionale Spannung wird mit einer Sense-Spannung mittels eines Komparators verglichen. Die Sense-Spannung gibt dabei den Strom durch das Schaltelement S an. Sobald die Sense-Spannung die Vergleichsspannung U_{Reg} übersteigt, kippt der Komparator und das Schaltelement S wird über den Steuerausgang OUT abgeschaltet.

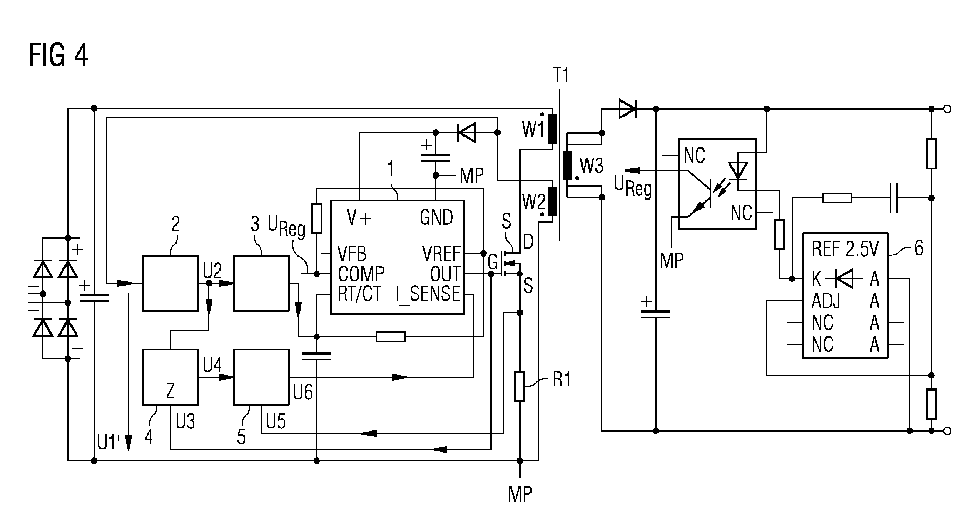

In Fig. 4 ist ein beispielhafter Aufbau für einen erfindungsgemäßen Eingriff in die Strommessung dargestellt. Dabei wird die an sich bekannte Valley-Switch-Regelung 3 eingesetzt.

Die am abgeschalteten Schaltelement S anliegende Spannung U1 schwingt hauptsächlich zwischen den Ausgangskapazitäten des Schaltelements S und der Hauptwicklung W1 mit einer ausrechend konstanten Ausschwingfrequenz. Mittels der Hilfswicklung W2 wird ein Abbild der am abgeschalteten Schaltelement S anliegenden, schwingenden Spannung erzeugt, wobei der Mittelwert dieser schwingenden Spannung einem Wert von Null Volt entspricht. Die Spannung der Hilfswicklung W2 ist als Eingangssignal einer Nulldurchgangserkennung 2 zugeführt, an deren Ausgang ein Nulldurchgangssignal U2 anliegt. Die Nulldurchgangserkennung 2 funktioniert
- mit einem Komparator, der das Eingangssignal mit Null Volt vergleicht, oder
- mit einem Komparator, der das Eingangssignal mit einer positiven oder negativen Spannung vergleicht und auf diese Weise das Nulldurchgangssignal U2 vor- bzw. nacheilend erzeugt, oder
- mit einer einfachen Transistorschaltung, oder
- mit einem CMOS-Gatter, welches den Vorteil einer sehr geringen Verzögerung aufweist, oder
- mit einer digitalen Schaltung, welche die

Ausschwingfrequenz sampelt und die Nulldurchgänge errechnet.

Das Nulldurchgangssignal U2 ist der Valley-Switch-Regelung 3 zugeführt und bewirkt, dass das Schaltelement S immer bei einem Valley der am abgeschalteten Schaltelement S anliegende Spannung U1 eingeschaltet wird. Beim Einschalten wird das Wickelgut aufmagnetisiert.

Zusätzlich ist das Nulldurchgangssignal U2 einem Analogzähler 4 zugeführt. Beim Abschalten des Schaltelements S wird der Analogzähler 4 zurückgesetzt. Konkret erfolgt eine Zurücksetzung mit einer fallenden Flanke am Steuerausgang OUT des PWM-Kontrollers 1. Es kommt zum Abmagnetisieren des Wickelguts. Im Anschluss an eine Abmagnetisierungsphase beginnt die am Schaltelement S anliegende Spannung U1 auszuschwingen. Über diesen Analogzähler 4 werden die Anzahl der Valleys bis zum nächsten Einschalten des Schaltelements S gezählt und bis zum nächsten Zurücksetzen gespeichert. Diese Speicherung erfolgt in Form einer sich reduzierenden Hilfsspannung U4, welche mit der Messwertspannung U5 des Stromes summiert wird. Dies geschieht in einfacher Weise mittels eines Summierers 5. Dadurch ändert sich bei einem Sprung zwischen zwei Valleys die übertragene Leistung P des Schaltwandlers derart, dass sich der Spannungs-Regler 6 in jedem Leistungsbereich stabilisiert.

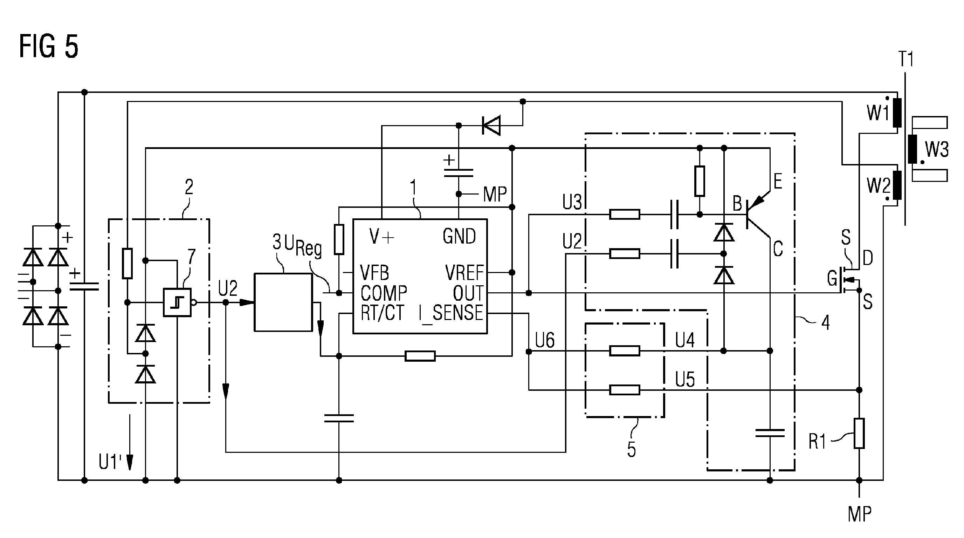

Eine detaillierte Ausführung ist in Fig. 5 gezeigt. Ein CMOS invertierendes Gatter 7 mit Schmitttriggereingang wird von einem VREF-Ausgang des PWM-Kontrollers 1 versorgt. Da die Spannung U1', welche an der Hilfswicklung W2 anliegt und ein Abbild der am abgeschalteten Schaltelement S anliegenden Spannung U1 ist, wesentlich größer sein kann als die Versorgungsspannung des Gatters 7, wird die Spannung U1' mit einem Widerstand und einer Klemmdiode auf die Versorgungsspannung des Gatters 7 begrenzt. Unterschreitet die Spannung U1' der Hilfswicklung W2 die interne Schwellspannung des Gatters 7, wird der Ausgang des Puffers 7 positiv und ein Nulldurchgang ist erkannt.

Durch die Schwellspannung wird bereits vor einem Nulldurchgang ein Signal erzeugt, wodurch es mit diesen einfachen Bauteilen möglich ist, auch bei sehr hohen Ausschwingfrequenzen einen Nulldurchgang frühzeitig zu erkennen und somit bei einem Valley einzuschalten.

Das CMOS Gatter 7 hat den Vorteil von sehr kurzen Ansprechzeiten. Somit kann ein Nulldurchgang bis zu einer Ausschwingfrequenz von einigen MHz genau genug erfasst werden.

Mit jeder fallenden Flanke der am Steuerausgang OUT des PWM-Kontrollers 1 anliegenden Schaltsignals U3 wird über einen Hochpass 8 ein Transistor 9 für eine definierte Zeit eingeschaltet. Dadurch lädt sich ein Kondensator 10 auf den Spannungswert der (z.B. 5V) am VREF-Ausgang des PWM-Kontrollers 1 anliegenden Spannung auf. Ein Widerstand 11 dient dabei zur Strombegrenzung. Damit ist der Analogzähler zurückgesetzt.

Mit jeder fallenden Flanke des Nulldurchgangssignals U2 wird der Kondensator 10 über eine Entladeschaltung 11 entladen. Das Ausmaß der Entladung wird dabei durch das Kapazitätsverhältnis des Kondensators 10 und einer Kapazität der Entladeschaltung 11 bestimmt. Günstigerweise umfasst die Entladeschaltung 11 einen Widerstand zur Strombegrenzung. Damit wird die am Kondensator 10 anliegende Hilfsspannung U4 mit jedem Nulldurchgang der an der Hilfswicklung anliegenden Spannung U1' geringer. Auf diese Weise werden die Valleys gezählt.

Die gezählten Valleys werden in Form der Hilfsspannung U4 mittels Summierers 4 mit der Messwertspannung U5, welche den Strom durch das Schaltelement S ausdrückt, summiert. Der Summierer 4 besteht im einfachsten Fall aus zwei aufeinander abgestimmten Widerständen.

Die summierte Spannung wird in weiterer Folge als modifizierte Sense-Spannung U6 dem PWM-Kontroller 1 zugeführt.

Mit der gezeigten Ausführung wird mit wenigen Bauteilen eine kostengünstige Lösung realisiert um hörbare Reglerschwingen und eine Wirkungsgradverminderung zu verhindern.

## Patentansprüche

1. Verfahren zur Regelung eines Schaltwandlers in einem quasiresonanten Betrieb, wobei einem PWM-Kontroller (1) zur Bestimmung eines Abschaltzeitpunkts eines Schaltelements (S) eine Sense-Spannung (U6) vorgegeben wird und wobei ein Einschaltzeitpunkt des Schaltelements (S) in ein Valley (V1, V2, V3, V4) einer am abgeschalteten Schaltelement (S) anliegenden, schwingenden Spannung (U1) fällt, **dadurch gekennzeichnet, dass** bei jedem nach einem Abschaltvorgang auftretenden Valley (V1, V2, V3, V4) die Sense-Spannung (U6) reduziert wird.

2. Verfahren nach Anspruch 1, **dadurch gekennzeichnet, dass** bei jedem auftretenden Valley (V1, V2, V3, V4) eine Hilfsspannung (U4) reduziert wird und dass die Sense-Spannung (U6) durch Summierung der Hilfsspannung (U4) und einer zum Strom durch das Schaltelement (S) proportionalen Messspannung (U5) gebildet wird.

3. Verfahren nach Anspruch 2, **dadurch gekennzeichnet, dass** mittels eines Analogzählers (4) aus einem Ausgangssignal eines Valley-Erkennungskreises die Hilfsspannung (U4) gebildet wird, welche bei jedem auftretenden Valley (V1, V2, V3, V4) reduziert wird.

4. Verfahren nach Anspruch 3, **dadurch gekennzeichnet, dass** mittels einer Nulldurchgangserkennung (2) die Nulldurchgänge einer an einer Hilfswicklung (W2) anliegenden Spannung (U1') detektiert werden und dass aus dem resultierenden Nulldurchgangssignal (U2) mittels des Analogzählers (4) die sich bei jedem auftretenden Valley (V1, V2, V3, V4) reduzierende Hilfsspannung (U4) gebildet wird.

5. Verfahren nach Anspruch 3 oder 4, **dadurch gekennzeichnet, dass** der Analogzähler (4) nach jedem Schaltzyklus mittels eines am Steuerausgang (OUT) des PWM-Kontrollers (1) anliegenden Schaltsignals (U3) zurückgesetzt wird.

6. Schaltwandler für quasiresonantes Schalten, wobei einem PWM-Kontroller (1) zur Bestimmung eines Abschaltzeitpunkts eine Sense-Spannung (U6) und eine Regler-Ausgangsspannung (U_{Reg}) zugeführt sind und wobei eine Vally-Switch-Regelung (3) zur Bestimmung eines Einschaltzeitpunktes vorgesehen ist, **dadurch gekennzeichnet, dass** das Signal am Ausgang eines Valley-Erkennungskreises einer Schaltung zur Reduzierung der Sense-Spannung (U6) zugeführt ist.

7. Schaltwandler nach Anspruch 6, **dadurch gekennzeichnet, dass** der Valley-Erkennungskreis als eine Nulldurchgangserkennung (2) ausgeführt ist, welcher eine an einer Hilfswicklung (W2) anliegende Spannung (U1') zugeführt ist.

8. Schaltwandler nach Anspruch 6 oder 7, **dadurch gekennzeichnet, dass** die Schaltung zur Reduzierung der Sense-Spannung (U6) einen Analogzähler (4) und einen Summierer (5) umfasst, dass das Signal am Ausgang des Valley-Erkennungskreises dem Analogzähler (4) zugeführt ist und dass eine Hilfsspannung (U4) am Ausgang des Analogzählers (4) und eine zum Strom durch das Schaltelement (S) proportionale Messspannung (U5) dem Summierer (5) zugeführt sind.

9. Schaltwandler nach Anspruch 8, **dadurch gekennzeichnet, dass** dem Analogzähler (4) ein am Steuerausgang (OUT) des PWM-Kontrollers (1) anliegendes Schaltsignal zugeführt ist, um nach jedem Schaltzyklus ein Zurücksetzen des Analogzählers (4) herbeizuführen.
